# EUROPÄISCHE PATENTSCHRIFT

(11) **EP 0 390 769 B1**
(45) Veröffentlichungstag und Bekanntmachung des Hinweises auf die Patenterteilung: **12.01.1994**
(21) Anmeldenummer: 90890079.8
(22) Anmeldetag: 19.03.1990
(51) Int. Cl.: B62D 25/02, B60J 5/04

(54) **Rammschutzträger für Türen und Seitenwände von Kraftfahrzeugkarosserien**
Shock beam for doors and side panels of superstructures of motor vehicles
Poutre de protection antichoc pour portes et panneaux latéraux de carrosseries de véhicules automobiles

(30) Priorität: 30.03.1989 AT 729/89
(43) Veröffentlichungstag der Anmeldung: 03.10.1990
(73) Patentinhaber: Austria Metall Aktiengesellschaft, A-5282 Braunau am Inn (AT)
(72) Erfinder: Garnweidner, Peter, A-5112 Lamprechtshausen (AT); Üblacker, Peter, A-5111 Bürmoos (AT)
(74) Vertreter: Pohlmann, Eckart, Dipl.-Phys.

(56) Entgegenhaltungen:
- EP-A- 0 235 091
- EP-A- 0 284 566

## Beschreibung

Die Erfindung bezieht sich auf einen Rammschutzträger für Türen und Seitenwände von Kraftfahrzeugkarosserien gemäß dem Oberbegriff des Patentanspruches 1.

Es ist bekannt, Fahrzeuge durch Einbau von Trägern in Türen und Seitenwände gegen seitliche Kollisionen zu schützen. In der Praxis verwendete Trägerprofile bestehen aus Rohren, I-Profilen, II-Profilen oder Hohlprofilen und werden üblicherweise in Höhe der Stoßstangen angebracht. In Türen sind sie an den Rahmenteilen verschraubt oder eingesteckt und in Seitenwänden an den Aufbauholmen befestigt. Um eine möglichst hohe Verformungsarbeit durch die seitlichen Teile bzw. Türen zu erreichen, sollen die eingebauten Rammschutzträger einer solchen Verformung eine Widerstandskraft entgegensetzen, die nur geringfügig kleiner als die der Rahmen- oder Türkonstruktionen der angrenzenden Teile ist. Andererseits soll während des Kollisionsvorganges die Widerstandskraft des Rammschutzträgers vor einer vollständigen Deformation des Bauteiles nicht so ansteigen, daß im wesentlichen nur die angrenzenden Holme oder Rahmenteile verformt werden und der Rammschutzträger aus dem Wagenbau herausgerissen wird. Da übliche Rammschutzträger aber während ihrer Verformung auch ihre Widerstandskraft erhöhen, kann diese Widerstandskraft nicht vom Ausgangszustand an annähernd so hoch sein, wie die Festigkeit der Holme- bzw. Rahmenteile. Bei einem bekannten Aufprallprofil dieser Art für Fahrzeugtüren (EP-A-0 235 091) bilden zwei im Abstand angeordnete Trägergurte zusammen mit diese verbindenden Querstegen ein Hohlprofil. Die Trägergurte stehen dabei über die Außenflächen der Querstege unter Bildung von Wulstabschnitten hinaus, deren Außenflächen sich in einer Ebene zur Außenfläche der Gurte fortsetzen, so daß ein Aufprallstoß sich auf die gesamte Gurtaußenfläche verteilt. Die Querstege erweitern sich außerdem unter Bildung gekrümmter Konturen zu den Gurten hin, um ein Abreißen am Übergang der Querstege in die Gurte sowie auch eine Verformung dieses Trägers möglichst zu verhindern.

Der Erfindung liegt nunmehr die Aufgabe zugrunde, einen Rammschutzträger zu schaffen, dessen Widerstandskraft über den gesamten Verformungsweg annähernd konstant bleibt und dadurch seine Anpassung an die Rahmenteile ermöglicht wird.

Diese Aufgabe wird mit einem Rammschutzträger nach dem Oberbegriff des Patentanspruches 1 erfindungsgemäß durch die kennzeichnenden Merkmale dieses Patentanspruches gelöst.

Durch die erhaben aus der Außenfläche des Druckgurtes vorstehenden Endteile greift im Kollisionsfall die auftretende Kraft an diesen Teilen an. Dadurch entsteht ein Moment um die Schnittlinie Druckgurt - Außensteg und die vorstehenden Teile werden in Kraftrichtung verdreht. Der Mittelteil des Gurtes wird nach außen gebogen und der Winkel zwischen der Innenfläche des Steges und des Druckgurtes vergrößert. Dies erzeugt eine Rißaufweitungskraft in dieser Ecke, mit der Folge, daß an dieser Stelle ein Längsriß im Druckgurt entsteht und der erhabene Teil des Druckgurtes von diesem abreißt und nach außen wegverformt wird. Dadurch wird das Widerstandsmoment des Rammschutzträgers verringert, was zu einer starken Verformung an dieser Stelle führt. Greift die von außen einwirkende Kraft schließlich an dem zwischen den Außenstegen liegenden Teil des Druckgurtes an, so wird der Druckgurt an dieser Stelle in den Träger hineingedrückt und dieser gesamte Bereich biegt sich dabei in Fahrzeugrichtung nach innen. Der Winkel zwischen den Innenflächen des Steges und des Druckgurtes bewirkt eine Kerbwirkung, die ein frühes Überschreiten der Festigkeitswerte nach einem ausgelegten Stempelweg erreicht, wodurch der Riß an dieser Stelle eingeleitet wird.
Es ist günstig, wenn die Wandstärke der erhabenen Teile des Druckgurtes stärker als der übrige Bereich ist. Auf diese Weise wird der Kerbfall erhöht. Weiterhin ist unter Last dieser Teil biegesteifer als der Mittelteil, wodurch ersterer nur gering verformt und die wesentliche Verformung in den angrenzenden weiter innen liegenden Bereich zwischen Außensteg und Druckgurt verlegt wird. Dies erhöht ebenfalls die Kerbwirkung.

Es ist ebenfalls von Vorteil, wenn die von der Innenseite des Druckgurtes und der Innenseite des jeweiligen Außensteges gebildete Ecke scharfkantig ist. Dadurch kann die Weglänge, nach der der Riß zu laufen beginnt, besser eingehalten werden.

Der Rammschutzträger kann erfindungsgemäß auch so gestaltet sein, daß der zwischen den Außenstegen liegende Druckgurt auf der Innenseite einen in der Ecke Außensteg - Druckgurt beginnenden, nach innen springenden Absatz aufweist. So kann ein spitzer Winkel in der Ecke Druckgurt - Außensteg erzielt und die Kerbwirkung zusätzlich erhöht werden.

Die Erfindung wird anhand von Ausführungsbeispielen, die auch in schematisierten Zeichnungen dargestellt sind, näher beschrieben. Es zeigen:
- Fig. 1: einen Querschnitt eines erfindungsgemäßen Rammschutzträgers,
- Fig. 2: einen Querschnitt durch einen anderen Rammschutzträger,
- Fig. 3: einen verformten Teil,von der Krafteinwirkungsrichtung aus gesehen,und
- Fig. 4: einen Schnitt nach der Linie IV-IV der Fig. 3.

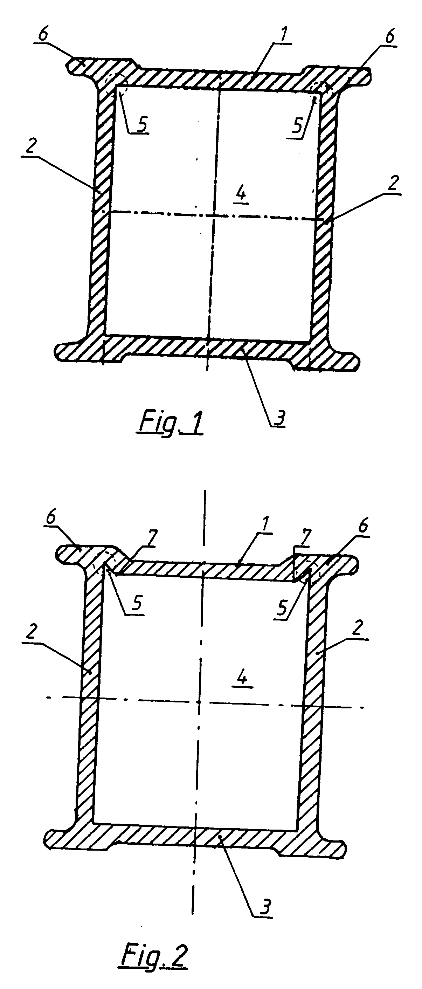

Der Rammschutzträger besteht aus einem Druckgurt 1, den Außenstegen 2 und einem Zuggurt 3. Die in einem Hohlraum 4 gebildeten Ecken 5 zwischen Druckgurt 1 und den Außenstegen 2 sind scharfkantig ausgeführt. In Fig. 2 ist eine alternative Ausführung dieser Ecke dargestellt, in der mit Ausgangspunkt dieser Ecke ein Absatz 7 nach innen in den Hohlraum des Profils zurückspringt. Erhabene Teile 6 ragen aus der Außenkontur des Druckgurtes 1 hervor und besitzen eine größere Wandstärke, als der zwischen den Außenstegen liegende Teil des Druckgurtes 1.

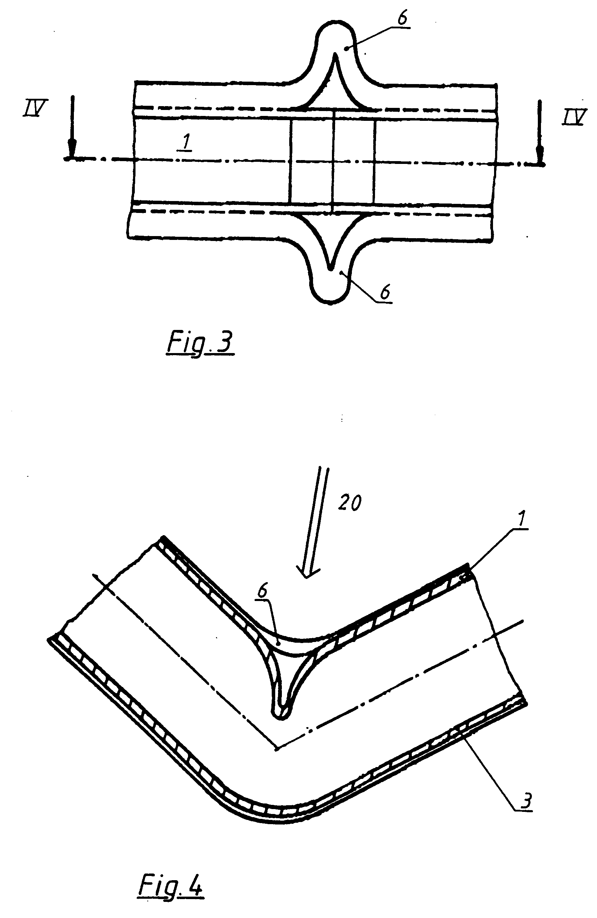

Fig. 3 und 4 zeigen den Verformungsbereich des Rammschutzträgers nach einem Kollisionsfall. Die erhabenen, über die Außenstege hinausragenden Teile 6 des Druckgurtes 1 sind von diesem abgerissen und haben sich nach außen verformt. Der Riß geht dabei von der Ecke 5 aus. Der zwischen den Außenstegen liegende Teil des Druckgurtes hat sich in Kraftrichtung 20 verformt und in den Hohlraum hineinbewegt.

## Patentansprüche

1. Rammschutzträger für Türen und Seitenwände von Kraftfahrzeugkarosserien, dessen im Abstand zueinander angeordnete Druck- und Zuggurte (1,3) zusammen mit diese Gurte verbindenden Außenstegen (2) einen Trägerhohlraum (4) bilden und der Druckgurt (1) seitlich über die Außenstege (2) hinausragende Teile (6) aufweist, dadurch gekennzeichnet, daß die Teile (6) des Druckgurtes (1) vom Bereich der Außenstege (2) bis zu ihren Außenrändern gegenüber der zwischen den Außenstegen (2) liegenden Außenfläche des Druckgurtes (1) erhaben ausgebildet sind.

2. Rammschutzträger nach Anspruch 1, dadurch gekennzeichnet, daß die Wandstärke der erhabenen Teile (6) des Druckgurtes (1) größer als die des übrigen Bereiches ist.

3. Rammschutzträger nach einem der vorhergehenden Ansprüche, dadurch gekennzeichnet, daß die von der Innenseite des Druckgurtes (1) und der Innenseite des anliegenden Außensteges (2) gebildete Ecke (5) scharfkantig ist.

4. Rammschutzträger nach einem der vorhergehenden Ansprüche, dadurch gekennzeichnet, daß der zwischen den Außenstegen (2) liegende Druckgurt (1) auf der Innenseite einen in der Ecke Außensteg - Druckgurt beginnenden, nach innen vorspringenden Absatz (7) aufweist.

## Claims

1. Bumper beam for doors and side panels of vehicle bodies, whose compression- and tension booms arranged with a spacing to one another together with outer webs (2) connecting these booms form a beam cavity (4), and in which the compression boom (1) comprises parts (6) projecting laterally beyond the outer webs (2), characterized in that the parts (6) of the compression boom (1) are, from the region of the outer webs (2) to their outside edges formed raised compared to the outside surface of the compression boom (1) lying between the outer webs (2).

2. Bumper beam according to claim 1, characterized in that the wall thickness of the raised parts (6) of the compression boom (1) is larger than that of the remaining region.

3. Bumper beam according to one of the preceding claims, characterized in that the corner (5) formed by the inside of the compression boom (1) and the inside of the adjacent outer web (2) is sharp-edged.

4. Bumper beam according to one of the preceding claims, characterized in that the compression boom (1) lying between the outer webs (2) comprises on its inside a step (7) beginning in the outer web / compression boom - corner and projecting inwards.

## Revendications

1. Poutre de protection antichoc pour portes et panneaux latéraux de carrosseries de véhicules automobiles, dont les membrures comprimée et tendue (1,3) forment en coopération avec des traverses extérieures (2) reliant ces membrures une cavité porteuse (4) et dans laquelle, la membrure comprimée (1) présente, latéralement, des parties (6) faisant saillie au-delà des traverses extérieures (2), caractérisée en ce que les parties (6) de la membrure comprimée (1) sont conformées de manière à constituer un relief s'étendant à partir de la zone des traverses extérieures (2) jusqu'à leurs bords extérieurs par rapport à la surface extérieure de la membrure comprimée (1) qui se trouve entre les traverses extérieures.

2. Poutre de protection antichoc selon la revendication 1, caractérisée en ce que l'épaisseur de la paroi des parties en relief (6) de la membrure comprimée (1) est supérieure à l'épaisseur du reste de la zone.

3. Poutre de protection antichoc selon l'une des revendications précédentes, caractérisée en ce que le coin (5) formé par la face intérieure de la membrure comprimée (1) et par la face intérieure de l'entretoise extérieure (2) adjacente est à bords vifs.

4. Poutre de protection antichoc selon l'une des revendications précédentes, caractérisée en ce que la membrure comprimée (1) se trouvant entre les traverses extérieures (2) présente sur sa face intérieure un retrait (7) commençant dans le coin de l'entretoise extérieure (1) de la membrane comprimée et faisant saillie vers l'intérieur.
